# EUROPEAN PATENT APPLICATION

(11) **EP 1 720 268 A1**
(43) Date of publication of application: **08.11.2006**
(21) Application number: 05719273.4
(22) Date of filing: 18.02.2005
(51) Int. Cl.: H04B 7/26

(54) **CALL PROCESSING SYSTEM, COMMUNICATION SERVER, COMMUNICATION TERMINAL, AND CALL PROCESSING METHOD**

(30) Priority: 19.02.2004 JP 2004043618
(71) Applicant: Softbank BB Corp., Tokyo 105-7304 (JP)
(72) Inventor: SON, Masayoshi, Minato-ku, Tokyo 106-0041 (DE)
(74) Representative: Grünecker, Kinkeldey, Stockmair & Schwanhäusser Anwaltssozietät
(86) International application number: PCT/JP2005/002603
(87) International publication number: WO 2005/081429

(57) **Abstract**

When a communication terminal 1 calls a communication terminal 2, a content server 4 acquires, based on a call signal addressed from the communication terminal 1 to the communication terminal 2, a call-reception end identifier of the communication terminal 2. The content server 4 then refers, based on the acquired call-reception end identifier, to table data T1, T2, then transmits, to the communication terminal 1, content data associated with the call-reception identifier, and then causes the communication terminal 1 to output and display the transmitted content data during processing of the call. This allows the user of the call receiver end to cause the terminal device of the call transmitter end to output any content data during processing of the call from the terminal device of the call transmitter end, independently of the reception circumstance and usage status at the call receiver end.

## Description

### Field Of The Invention

The present invention relates to a call processing system, a communication server, a communication terminal and a call processing method for performing the process of calling the communication terminal of the call reception end by the terminal device of the call transmitter end.

### Background Art

In recent years, the mobile communication devices such as the mobile telephones and the PHSs have become more prevalent. In the communication among these mobile communication devices, the terminal device of the call transmitter end performs the call process to call the terminal device of the call receiver end, while the terminal device of the call receiver end performs the call reception process in response to this call, in order to establish communication. When the terminal device of the call transmitter end is calling, it can confirm the call process by hearing the ringing tone and so forth.

Incidentally, as a prior art technique (for example, refer to Japanese Patent Published Application No. 2004-23367), while the call process is performed at the call receiver end, the terminal device of the call transmitter end is informed of the status at the call receiver end by sending sound data and the like from the terminal device of the call receiver end. In accordance with such a technique, for example, when the user at the call receiver end cannot receive the incoming call and so forth, it is possible to inform the calling user of the situation such as why the user at the call receiver end cannot receive the call.

### Summary of The Invention

However, in the case of the prior art technique as described above, since message data such as sound data is send to the terminal device of the call transmitter end from the terminal device of the call receiver end, the message data has to be stored in the terminal device in advance, so that there is a problem that a memory device of a large capacity has to be incorporated therein. Particularly, in the case where the message data is provided in a data format for motion data or the like, the data size thereof is increased and the memory consumption may be too much.

In addition to this, in the case of the prior art technique as described above in which data is transmitted from the terminal device of the call receiver end during the call process, the transmission of message data is started to the terminal device of the call transmitter end from the terminal device of the call receiver end after the call process is started at the call transmitter end and after the call reception process is started at the call receiver end. Because of this, in accordance with this technique, there is a problem that it takes a much time to output the message data after the calling manipulation at the terminal device of the call transmitter end.

Furthermore, in accordance with the above technique, since the message data is returned only after starting the call reception process at the call receiver end, there is a problem that the message data is not returned, for example, when the terminal device of the call receiver end is located in the area where radio waves cannot reach or when the terminal device of the call receiver end is not powered up.

The present invention is invented by taking into consideration the above situation, and it is an object thereof to provide a call processing system, a communication server, a communication terminal and a call processing method in which the user at the call receiver end can arbitrarily output any content to the terminal device of the call transmitter end while performing the call process at the terminal device of the call transmitter end irrespective of the receiving condition and usage condition at the call receiver end.

In order to accomplish the object as described above, when a call process is performed from a first communication terminal (the call transmitter end terminal) to a second communication terminal (the call reception end terminal), a communication server acquires the call reception end identifier of the second communication terminal on the basis of a call signal transmitted from the first communication terminal to the second communication terminal, refers to a data table in which content data is associated with a call reception end identifier for identifying the second communication terminal on the basis of the call reception end identifier as acquired, and transmits the content data associated with the call reception end identifier to the first communication terminal, such that the content data, which is transmitted, is output and displayed at the first communication terminal during the call process.

In accordance with the present invention as described above, it is possible to start the call process from the call transmitter end terminal, and output content such as motion pictures, which is arbitrarily selected by the user of the call reception end terminal, to the call transmitter end terminal in advance of establishing the connection with the call reception end terminal. Because of this, in the case of the present invention, even if the call reception end terminal is located in the area where radio waves cannot reach or is not powered up, or even if the call process can not quickly be started by a roaming service and the like, it is possible to output content at the call transmitter end terminal.

In the invention as described above, it is preferred that the content data is associated in the data table further with a call transmitter end identifier for identifying the first communication terminal which is the terminal at the call transmitter end, wherein the call transmitter end identifier of the first communication terminal as the call transmitter is acquired on the basis of the call signal, wherein the data table is referred to on the basis of the call reception end identifier and the call transmitter end identifier as acquired, wherein the content data associated with the terminal identifiers is acquired from the content data accumulating unit, and wherein the content data is transmitted to the first communication terminal. In this case, it is possible to output and display a different item of the content for each terminal at the call transmitter end and provide a variety of responses.

In the invention as described above, it is preferred to measure the frequency of transmitting the content data from the content transmitter unit and charge the user of the second communication terminal in accordance with the transmitting frequency. In this case, it is possible to collect the usage charge of content in accordance with the frequency of using the service of the call process.

In the invention as described above, it is preferred that content data is sold on the basis of a manipulation signal transmitted from the second communication terminal, and that this content data as sold is registered as new content in the data table in association with the call reception end identifier. In this case, it is possible to use the content as it is, which is purchased from a server, as the content for the call process such that the user can use a variety of content without uploading data and so forth.

In the invention as described above, it is preferred that content is acquired from the second communication terminal on the basis of a manipulation signal transmitted from the second communication terminal, and that the content data, which is acquired by the upload unit, is registered as new content in the data table in association with the call transmitter end identifier. In this case, it is possible to implement an original answering process of the user by uploading and accumulating in the communication server the content, which is for example an image captured by the user at the call reception end with a digital camera incorporated in a mobile terminal, as the content for the call process, and thereby the range of available content can be expanded.

In the invention as described above, it is preferred that the content data is registered in the data table in association with the call transmitter end identifier for identifying the first communication terminal as the call transmitter on the basis of the manipulation signal from the second communication terminal. In this case, it is possible for the user at the call reception end to select and register content to be output for each terminal at the call transmitter end, and output and display a different item of the content for each terminal at the call transmitter end so that a variety of responses can be provided.

In the invention as described above, it is preferred that the telephone number and the IP address assigned to the second communication terminal are used as the call reception end identifier, that the telephone number and the IP address assigned to the first communication terminal are used as a call transmitter end identifier for identifying the first communication terminal at the call transmitter end, that an IP address is acquired from a telephone number, as acquired, by referring to a telephone number table in which the telephone number is associated with the IP address, and a sound signal is converted into an IP packet and relayed between the first communication terminal and the second communication terminal as the IP packet, that the call reception end identifier and the call transmitter end identifier are acquired as IP addresses, and that the content data is transmitted to the IP address at the call transmitter end as an IP packet.

In this case, it is possible to utilize the call process service as described above even in the case of the Internet telephony, and quickly output and display content at the call transmitter end terminal even when calling the terminal at the call reception end is delayed due to the connection process of the Internet telephony.

### Brief Description Of The Drawings

[Fig. 1] A block diagram for showing the overall configuration of the call processing system in accordance with an embodiment.
[Fig. 2] A functional block diagram for showing the internal configuration of the content server in accordance with the embodiment.
[Fig. 3] An explanatory view for showing the data structure of table data in accordance with the embodiment.
[Fig. 4] A functional block diagram for showing the internal configuration of the communication terminal in accordance with the embodiment.
[Fig. 5] A sequence diagram showing the procedure of the call processing method in accordance with the embodiment.
[Fig. 6] A block diagram for showing the overall configuration of the call processing system in accordance with the embodiment.
[Fig. 7] A sequence diagram showing the procedure of the call processing method in accordance with the embodiment.

### Best Mode for Carrying Out the Invention

[First Embodiment]

### (Overall Configuration Of Call processing System)

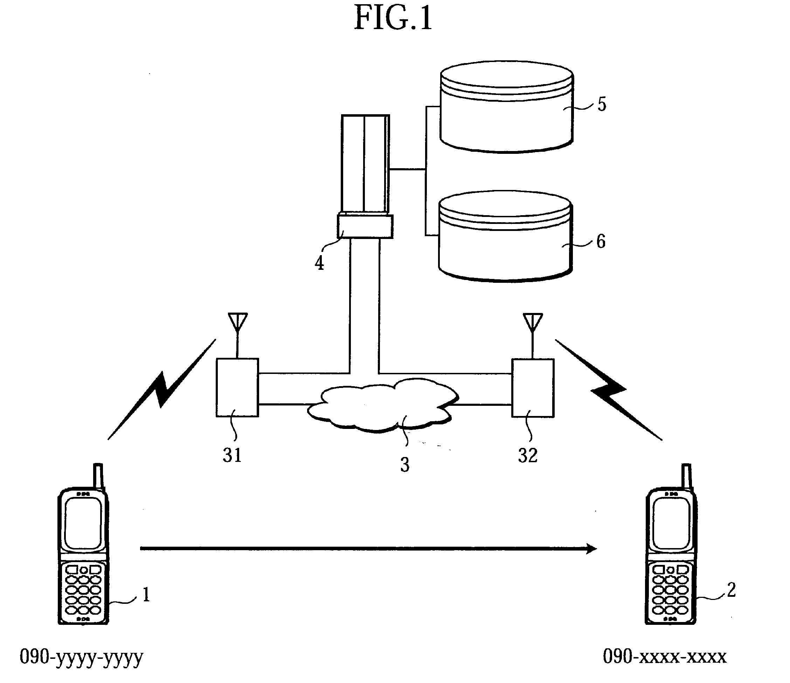

The first embodiment of the present invention will be explained with reference to drawings. Fig. 1 is a block diagram for showing the overall configuration of the call processing system in accordance with the present embodiment.

As shown in the same figure, in accordance with the present embodiment, the call process is performed from a first communication terminal 1 to a second communication terminal 2. These communication terminals 1 and 2 are capable of transmitting and receiving signals to and from base stations 31 and 32 by radio communication. The base stations 31 and 32 are capable of transmitting and receiving signals through a communication network 3. The communication terminals 1 and 2 are capable of transmitting and receiving voice conversation signals and data through the base stations 31 and 32 and the communication network 3.

The above base stations 31 and 32 are provided with a content server 4 connected thereto. When the call process is started at the base station 31 or 32, this content server 4 receives the notification thereof from the base station 31 or 32 and transmits content data to the terminal device of the call transmitter end (in this case, the communication terminal 1).

(Configuration of Content Server)

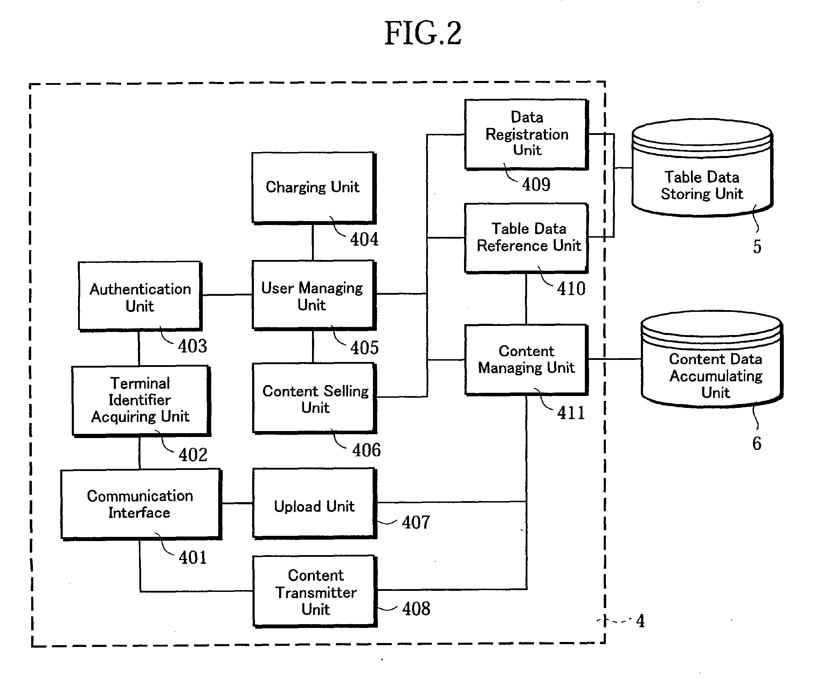

Fig. 2 is a functional block diagram for showing the internal configuration of the above content server 4. As shown in the same figure, the above content server 4 is provided with a content data accumulating unit 6 for accumulating content data, and a table data storing unit 5 for storing data tables T1 and T2.

The content data accumulating unit 6 is a database for accumulating moving pictures, still images, sound data and the like which are purchased and uploaded by the users, while a content ID such as "C-1" is given to each item of the content data. The content server 4 is provided with a content managing unit 411 which serves to read and write data from and to this content data accumulating unit 6.

The table data storing unit 5 stores the data tables T1 and T2 for associating content data with call reception end identifiers (telephone numbers, IP addresses and the like) for identifying the respective communication terminals, reads the data as requested in response to the request from a table data reference unit 410 of the content server 4, registers new data and updates the current data in response to the request from a data registration unit 409 and so forth.

The content managing unit 411 is a module for reading and writing content data from and to the content data accumulating unit 6 on the basis of the instructions of the table data reference unit 410, a content selling unit 406 and a user managing unit 405.

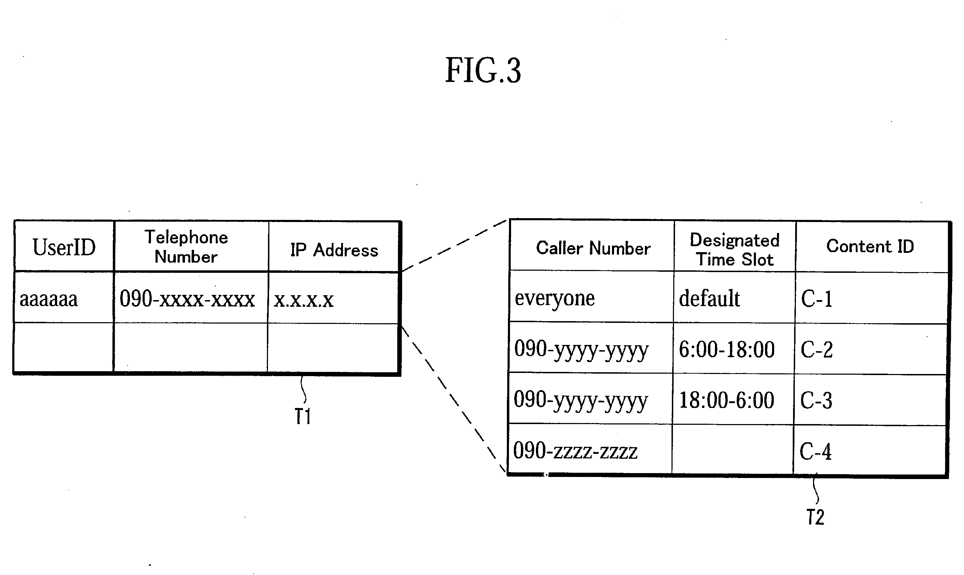

As shown in Fig. 3, the table data stored in the above table data storing unit 5 is provided as the upper data table T1 in which are registered the telephone number and the IP address of the communication terminal used by each user (in this case, the communication terminal 2) in association with the user ID, and the lower data table T2 in which are registered the calling number, the time slot as designated and the content ID of each of other users in association with the record of this each of other user. It is possible to transmit different content data for different telephone numbers at the call transmitter end by registering a content ID in the lower data table T2 for each telephone number at the call transmitter end, and it is also possible to transmit different content data in accordance with the time by registering time slots as designated in the lower data table T2.

The table data reference unit 410 has the content managing unit 411 acquire content data associated with the call reception end identifier from the content data accumulating unit 6 by referring to the data tables T1 and T2 on the basis of the call reception end identifier acquired by a terminal identifier acquiring unit 402 and outputting the referring results to the content managing unit 411, and the table data reference unit 410 has the content managing unit 411 transmit the content data to the content transmitter unit 408.

The data registration unit 409 is a module for adding records anew to the data tables T1 and T2 and updating the records which have already been registered, and provided with the functionality of registering, as table data, the content data sold by in the content selling unit 406 and the content data uploaded to an upload unit 407 in association with the call reception end identifier. In addition to this, the data registration unit 409 is provided with the functionality of registering the content data in the data tables T1 and T2 in association with the call transmitter end identifier on the basis of the manipulation signal from the communication terminal.

In addition to this, as shown in Fig. 2, the content server 4 is provided with a communication interface 401 for transmitting and receiving content data with the respective base stations 32 and 32, the terminal identifier acquiring unit 402 for acquiring the identifier of a communication terminal, and an authentication unit 403 for performing user authentication on the basis of the terminal identifier.

The communication interface 401 is a module for transmitting data, which is acquired from the base stations 31 and 32, to the terminal identifier acquiring unit 402. Also, this communication interface 401 is connected to the upload unit 407 and the content transmitter unit 408 for enabling the delivery of content through the content transmitter unit 408 and the transmission and reception of data to and from the respective terminals during the uploading of content through the upload unit 407.

The terminal identifier acquiring unit 402 is a module for acquiring the call transmitter end identifier and the call reception end identifier which are the identifier at the call transmitter end (in this case, the communication terminal 1) and the identifier at the call reception end (in this case, the communication terminal 2) from the radio base station (in this case, the base station 31) at the call transmitter end during the call process. In addition to this, when selling and uploading content, and registering and updating content in the data table, the terminal identifier acquiring unit 402 acquires the identifier of the terminal, which is accessing. The terminal identifier which is acquired by this terminal identifier acquiring unit 402 is transmitted to the authentication unit 403.

The authentication unit 403 serves to store the personal information of users, perform the user authentication on the basis of the identifier acquired by the terminal identifier acquiring unit 402, and grant permission to deliver, purchase, upload content and so forth. The result of authentication by this authentication unit 403 is transmitted to the user managing unit 405. The user managing unit 405 is a module for managing the service usage history of the respective users, and charging through a charging unit 404 in accordance with this service usage history. In addition to this, the user managing unit 405 is provided with the functionality of managing data stored in the table data storing unit 5 and managing the input and output of content through the content managing unit 411.

The content transmitter unit 408 is a module for transmitting the content data, which is read from the content data accumulating unit 6 by the content managing unit 411, through the communication interface 401. The upload unit 407 is a module for storing the content data, which is uploaded from a communication terminal through the communication interface 401, in the content data accumulating unit 6 through the content managing unit 411. The data registration unit 409 registers the content data acquired through this upload unit 407 in the data table T2 as new content data in association with the call reception end identifiers.

In addition to this, the content server 4 in accordance with the present embodiment is provided with the charging unit 404 which counts the frequency of transmitting content data through the content transmitter unit 408 and charges the users in accordance with the transmitting frequency. This charging unit 404 is connected to the user managing unit 405 in order to calculate the charges in accordance with the transmitting frequency through the user managing unit 405, and calculate the charges corresponding to the content as sold.

Furthermore, in accordance with the present embodiment, the content server 4 is provided with the content selling unit 406 which sells content data on the basis of the manipulation signal from the communication terminal (in this case, the communication terminal 2). This content selling unit 406 accepts a purchase request from the communication terminal, associates the content data, which is sold, with the call reception end identifier in response to the request, and registers the content data as new content data in the data table T2 of the data registration unit 409.

(Configuration of Communication Terminal)

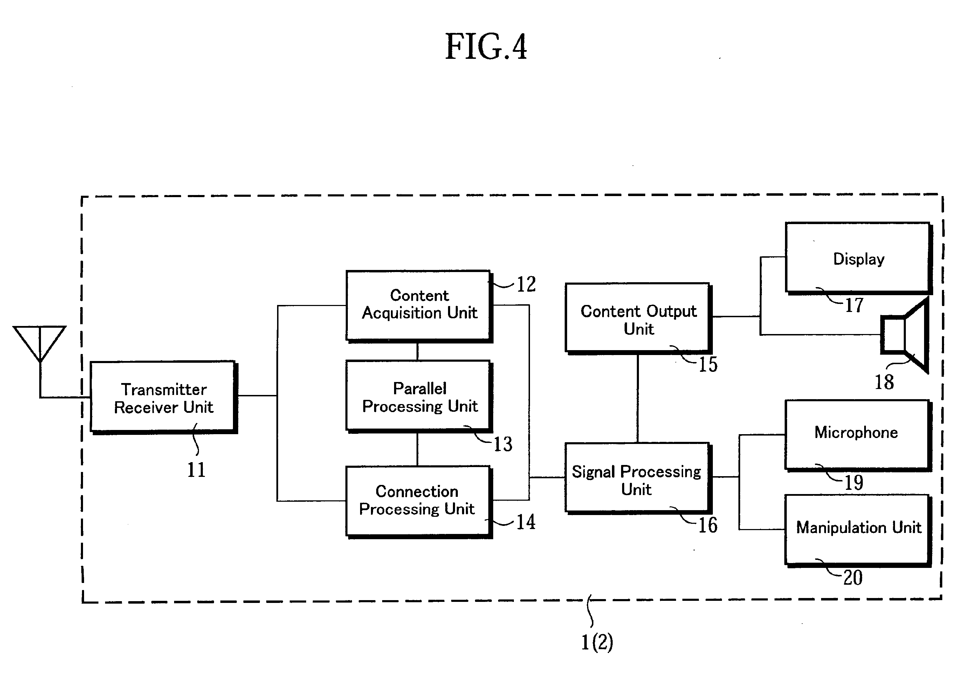

Fig. 4 is a functional block diagram for showing the internal configuration of the communication terminal in accordance with the present embodiment. Meanwhile, in the case of the present embodiment, it is assumed that the communication terminals 1 and 2 have the common structure.

In the same figure, the communication terminal 1 or 2 is provided with a display 17 such as a liquid crystal display for displaying moving pictures, characters and the like, a speaker 18 for outputting sounds, a microphone 19 for acquiring sounds and outputting them as electrical signals, and a manipulation unit 20 such as a numerical keypad for inputting manipulation signals.

In addition to this, the communication terminal 1 or 2 is provided with a signal processing unit 16 and a content output unit. The signal processing unit 16 serves to convert the signals as input through the microphone 19 and the manipulation unit 20 into digital signals and so forth, and is also provided with the functionality of converting the digital signals as input through a connection processing unit 14 and a content acquisition unit 12 into sound signals and image signals in predetermined formats and outputting them. The content output unit is a module for outputting the image signals and sound signals as converted by the signal processing unit 16 through the display 17 and the speaker 18.

Furthermore, the communication terminal 1 or 2 is provided with a transmitter receiver unit 11, the content acquisition unit 12, the connection processing unit 14 and a parallel processing unit 13. The transmitter receiver unit 11 is a module for performing radio communication at a predetermined frequency with the base station 31 or 32 and transmitting and receiving data, and the download and upload of voice conversation and data is performed through this transmitter receiver unit 11. The content acquisition unit 12 is a module for downloading content data through the transmitter receiver unit 11, and the content data downloaded by this content acquisition unit 12 is converted by the signal processing unit 16 into image and sound signals and output to the display 17 and the speaker 18 through the content output unit. The connection processing unit 14 is a module which is provided with a memory in which are stored a telephone number, an IP address and the like which are terminal identifiers for identifying the own terminal, and transmits the terminal identifier of the own terminal to the base station 31 or 32 through the transmitter receiver unit 11, when performing the call process, in order to establish the communication with the terminal at the call reception end.

The parallel processing unit 13 is a module for enabling the operation of the connection processing unit 14 and the operation of the content acquisition unit 12 in parallel when performing the call process, and serves to download content data through the content acquisition unit 12, at the same time as the call process and the communication establishing process are performed by the connection processing unit 14, and download content data from the content server 4 to output it through the display 17 and the speaker 18 while calling the terminal by the call process at the call reception end.

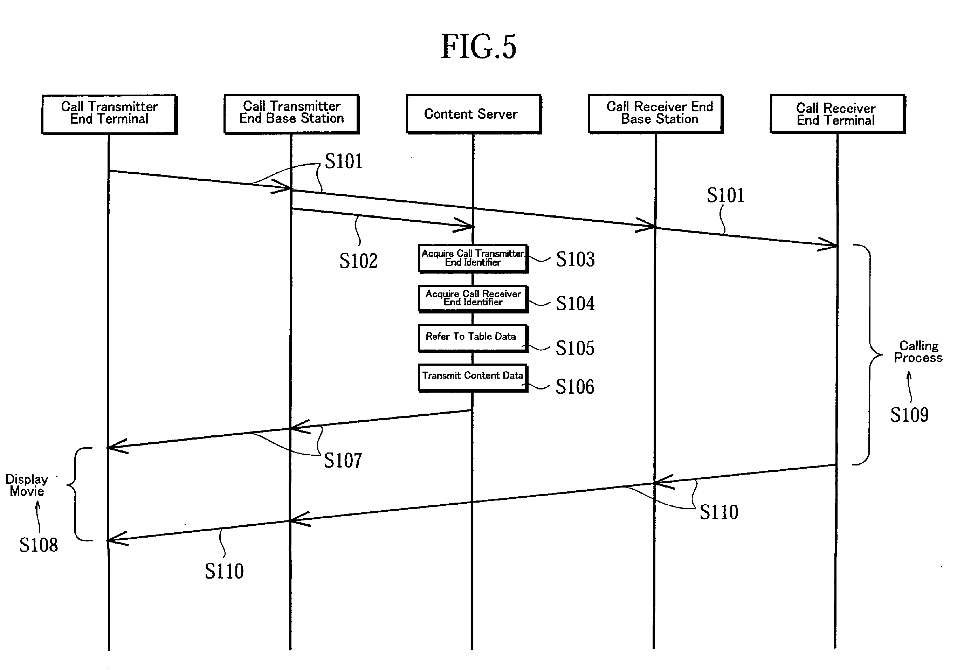

(Call processing Method Making Use Of Call processing System)
The call processing method making use of the call processing system as explained above is performed in accordance with the following procedure. Fig. 5 is a sequence diagram showing the procedure of the call processing method in accordance with the present embodiment. In this case, the call process will be explained in the exemplary case where the communication terminal 1 calls the communication terminal 2. Incidentally, in the case of the present embodiment, it is assumed that "090 - yyyy - yyyy" is assigned to the communication terminal 1, and "090 - xxxx - xxxx" is assigned to the communication terminal 2.

First, the call process is started in response to the user manipulation at the communication terminal 1. In this call process, the connection processing unit 14 transmits the call transmitter end telephone number "090 - yyyy - yyyy", which is an identifier of the communication terminal 1, and the call reception end telephone number "090 - xxxx - xxxx", which is an identifier of the communication terminal 2 to the base station 31, which is the call transmitter end base station, as a call signal. In the base station 31, the call transmitter end telephone number "090 - yyyy-yyyy" and the call reception end telephone number "090-xxxx-xxxx" as received are transferred to the base station 32, which is the call reception end base station, and the base station 32 starts calling the communication terminal 2 in steps S101 and S109.

On the other hand, when receiving the call signal, the base station 31 transfers the call transmitter end telephone number "090 - yyyy - yyyy" and the call reception end telephone number "090 - xxxx - xxxx", which are included in the call signal, to the content server 4, and the content server 4 receives these call transmitter end telephone number "090 - yyyy- yyyy" and call reception end telephone number "090 - xxxx -xxxx" and referrs to the data tables T1 and T2 in steps S102 to S105. More specifically speaking, while the content server 4 receives the call transmitter end telephone number "090 - yyyy- yyyy" and the call reception end telephone number "090-xxxx - xxxx" from the terminal identifier acquiring unit 402, the authentication unit 403 performs authentication on the basis of the telephone number "090 - xxxx - xxxx" as acquired, and if it is determined that the communication terminal 2 can receive the call process service, the content ID associated with the call transmitter end telephone number "090 - yyyy - yyyy" and the call reception end telephone number "090-xxxx - xxxx" is read by the user managing unit 405 and the table data reference unit 410.

Describing the table data reference in detail, the upper data table T1 is first referred to on the basis of the call reception end telephone number "090-xxxx-xxxx" in order to extract a record corresponding to the call reception end telephone number "090 - xxxx - xxxx", and then the lower data table T2, which is associated with the record as extracted, is referred to for extracting a record corresponding to the call transmitter end telephone number "090-yyyy-yyyy" in order to select the content ID. If there is no record corresponding to the call transmitter end telephone number "090 - yyyy - yyyy", the content ID corresponding to "everyone" is selected by default, and conversely if there are records corresponding thereto, the lower data table T2 is referred to determine whether or not there is any additional extraction condition in order to narrow down the extraction of record. The content ID which is finally selected is output to the content managing unit 411 in this manner, and the content managing unit 411 reads the content data corresponding to the content ID.

Then, the content data read out by the content managing unit 411 is transmitted by the content transmitter unit 408 in step S106.

The content data transmitted from the content server 4 is received by the communication terminal 1 through the base station 31 in step S107. In the communication terminal 1, the parallel processing unit 13 performs the call process by the connection processing unit 14 and the content acquisition process by the content acquisition unit 12 in parallel, and the content data is output in step S108 (images are displayed by the display 17, and sounds are output by the speaker 18) until the reply signal from the communication terminal 2 is received in step S110.

(Actions and Effects of Call processing System And Call processing Method)
In accordance with the call processing system and the call processing method of the present embodiment as described above, it is possible to start the call process from the communication terminal 1, and output content such as motion pictures, which are arbitrarily selected by the user of the communication terminal 2, to the communication terminal 1 in advance of establishing the connection with the communication terminal 2. Because of this, in the case of the present embodiment, even if the communication terminal 2 is located in the area where radio waves cannot reach or is not powered up, or even if the call process can not quickly be started by a roaming service and the like, it is possible to output content at the communication terminal 1.

In the case of the present embodiment, since the content data is associated further with the call transmitter end identifier for identifying the communication terminal 2 in the data tables T1 and T2, the content can be furthermore limited by referring to the data tables T1 and T2 on the basis of the call transmitter end identifier, and thereby it is possible to output and display a different item of the content for each terminal at the call transmitter end and provide a variety of responses.

In the case of the present embodiment, since the charging unit 404 measures the frequency of transmitting content data in order to charge the user of the communication terminal 2 in accordance with the transmitting frequency, and thereby it is possible to collect the usage charge of content in accordance with the frequency of using the service of the call process.

In the case of the present embodiment, since the content selling unit 406 serves to sell content data, and the content data as sold can be registered as new content data in the data tables T1 and T2, it is possible to use the content, which is purchased from the content server 4, as the content for the call process as it is such that the user can use a variety of content without uploading data and so forth.

Also, in the case of the present embodiment, since the upload unit 407 serves to acquire the content uploaded by the communication terminal 2 on the basis of the manipulation signal from the communication terminal 2, and register this content data as acquired in the data tables T1 and T2 as new content data, it is possible to implement an original answering process of the user by uploading the content, which is for example an image captured by the user at the call reception end with a digital camera incorporated in the communication terminal 2, as the content for the call process, and thereby the range of available content can be expanded.

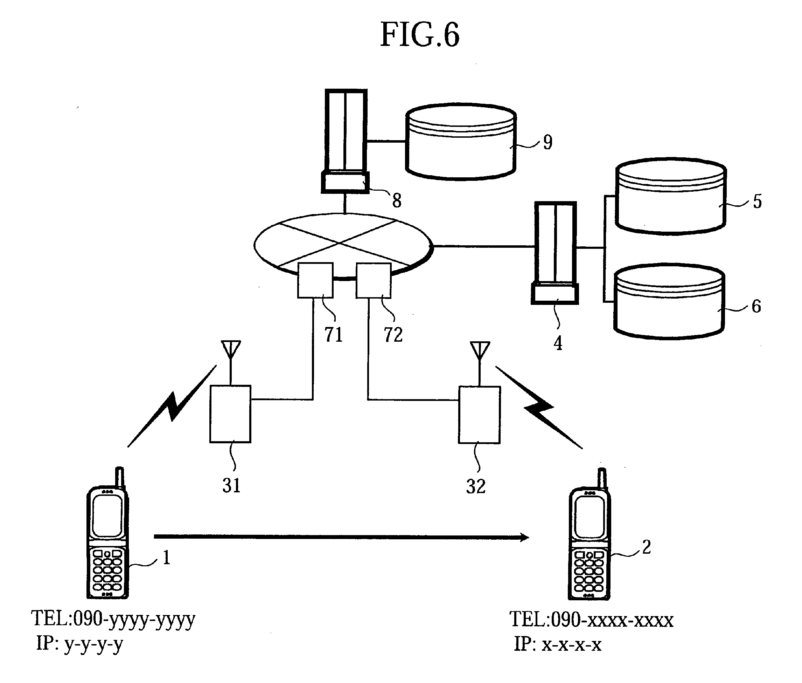

[Second Embodiment]
Next, the second embodiment of the present invention will be explained. Fig. 6 is a block diagram for showing the overall configuration of the call processing system in accordance with the present embodiment. The present embodiment is characterized in that the so-called IP telephony is applied to the communication system of the first embodiment as described above.

Namely, in the case of the present embodiment, a telephone conversation is made between the communication terminal 1 and the communication terminal 2 through IP packet communication on the basis of the VOIP technique. More specifically speaking, as illustrated in Fig. 6, the base stations 31 and 32 are connected to an IP network 7 through gateways 71 and 72, and the content server 4 as described above is located on the IP network 7 as well as a connection server 8 for establishing IP telephone communication.

This call connection server 8 is provided with a telephone number table in which the telephone numbers assigned to the respective communication terminals are associated with IP addresses, and an IP address reference unit for acquiring an IP address from the telephone number, as acquired, by referring to this telephone number table.

On the other hand, the communication terminal 1 or 2 in accordance with the present embodiment is given a telephone number and an IP address as the terminal identifiers thereof, and the communication terminal 1 or 2 is provided with the functionality of converting sound signals into IP packets and transmitting and receiving the sound signals as IP packets on the basis of these telephone number and IP address so that the IP packets are transmitted and received through a VOIP relay unit which is provided in the connection server 8.

In addition to this, in the content server 4 in accordance with the present embodiment, the terminal identifier acquiring unit 402 as described above acquires the call reception end identifier and the call transmitter end identifier respectively as an IP address "x.x.x.x" and an IP address "y.y.y.y", and the above content transmitter unit 408 transmits content data to the IP address "y.y.y.y" at the call transmitter end as IP packets.

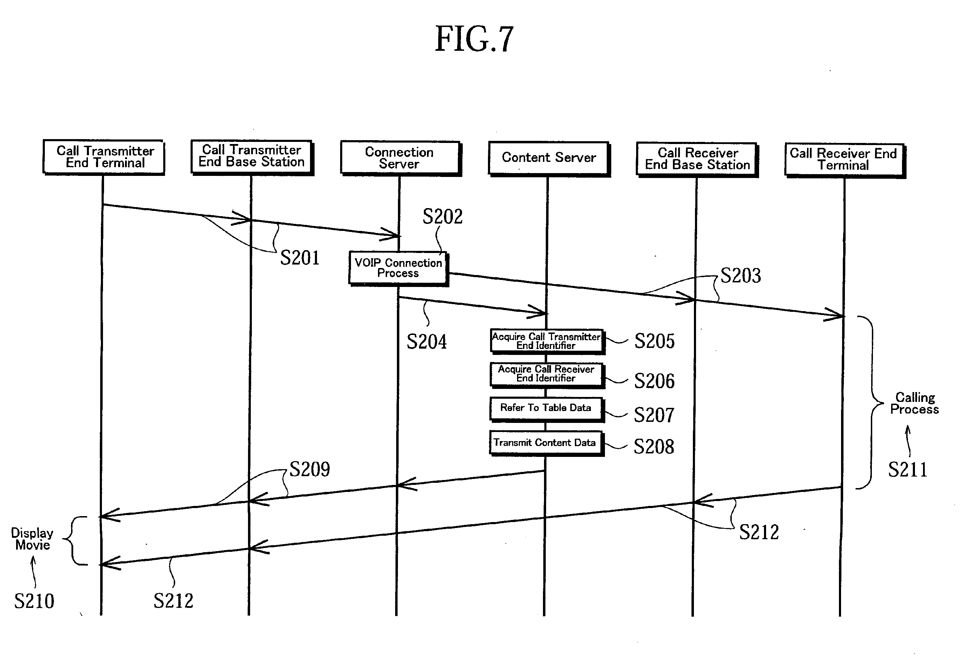

The following procedure is performed as the call processing method making use of the call processing system in accordance with the present embodiment having the characteristics as has been discussed above. Fig. 7 is a sequence diagram showing the procedure of the call processing method in accordance with the present embodiment. First, the call process is started in response to the user manipulation at the communication terminal 1. In this call process, the connection processing unit 14 transmits the call transmitter end telephone number "090-yyyy-yyyy", which is an identifier of the communication terminal 1, and the call reception end telephone number "090 - xxxx - xxxx", which is an identifier of the communication terminal 2 to the base station 31, which is the call transmitter end base station, as a call signal. In the base station 31, the call transmitter end telephone number "090 - yyyy - yyyy" and the call reception end telephone number "090 - xxxx - xxxx" as received are transferred to the connection server 8 through the gateway 71 in step S201.

The connection servers 8 acquires the IP address "x.x.x.x" of the communication terminal 1 by referring to the telephone number table on the basis of the call reception end telephone number "090 - xxxx - xxxx", and acquires the IP address "y.y.y.y" of the communication terminal 2 by referring to the telephone number table on the basis of the call transmitter end telephone number "090 - yyyy - yyyy". The connection server 8 relays IP packets on the basis of these IP addresses "x.x.x.x" and "y.y.y.y", and starts calling the communication terminal 2 through the base station 32 in steps S203 and S211.

In addition to this, the call connection server 8 transfers the IP address "y.y.y.y" at the call transmitter end and the IP address "x.x.x.x" at the call reception end to the content server 4, and the content server 4 receives the IP address "y.y.y.y" at the call transmitter end and the IP address "x.x.x.x" at the call reception end and refers to the data tables T1 and T2 in steps S205 to S207. More specifically speaking, while the content server 4 receives the IP address "y.y.y.y" and the IP address "x.x.x.x" from the terminal identifier acquiring unit 402, the authentication unit 403 performs authentication on the basis of the IP address "x.x.x.x" as acquired, and if it is determined that the communication terminal 2 can receive the call process service, the content ID associated with the IP address "y.y.y.y" and the IP address "x.x.x.x" is read by the user managing unit 405 and the table data reference unit 410.

Then, the content data read by the content managing unit 411 is transmitted by the content transmitter unit 408 in step S209.

While the content data as transmitted from the content server 4 is received by the communication terminal 1 through the base station 31, the parallel processing unit 13 performs the call process by the connection processing unit 14 and the content acquisition process by the content acquisition unit 12 in parallel, and the content data is output in step S210 (images are displayed by the display 17, and sounds are output by the speaker 18) until the reply signal from the communication terminal 2 is received in step S212.

In accordance with the call processing system and the call processing method of the present embodiment as explained above, it is possible to utilize the call process service explained as the first embodiment even in the case of the Internet telephony, and quickly output and display content at the call transmitter end terminal even when calling the terminal at the call reception end is delayed due to the connection process of the Internet telephony.

### INDUSTRIAL APPLICABILITY

As has been discussed above, in accordance with the call processing system, the communication server, the communication terminal and the call processing method of the present invention, it is possible to output any content data, which is arbitrarily selected by the user at the call receiver end, to the terminal device of the call transmitter end while performing the call process at the terminal device of the call transmitter end irrespective of the receiving condition and usage condition at the call receiver end.

## Claims

1. A call processing system operable to perform a call process from a first communication terminal to a second communication terminal, said call processing system comprising:
a content data accumulating unit operable to accumulate content data;
a data table in which content data is associated with a call reception end identifier for identifying said second communication terminal;
a terminal identifier acquiring unit operable to acquire the call reception end identifier of said second communication terminal on the basis of a call signal transmitted from said first communication terminal to said second communication terminal;
a content transmitter unit operable to acquire, from said content data accumulating unit, the content data associated with said call reception end identifier by referring to said data table on the basis of the call reception end identifier as acquired by said terminal identifier acquiring unit, and transmit the content data to said first communication terminal;
a call transmitter end output unit operable to output and display said content data, which is transmitted, at said first communication terminal during said call process.

2. The call processing system as claimed in claim 1 wherein said content data is associated in said data table further with a call transmitter end identifier for identifying said first communication terminal which is the terminal at the call transmitter end,
wherein said terminal identifier acquiring unit acquires the call transmitter end identifier of the first communication terminal as the call transmitter on the basis of said call signal,
wherein said content transmitter unit operable to refer to said data table on the basis of the call reception end identifier and the call transmitter end identifier acquired by said terminal identifier acquiring unit, acquire the content data associated with said terminal identifiers from said content data accumulating unit, and transmit the content data to said first communication terminal.

3. The call processing system as claimed in claim 1 further comprising a charging unit operable to measure the frequency of transmitting said content data from said content transmitter unit and charge the user of said second communication terminal in accordance with the transmitting frequency.

4. The call processing system as claimed in claim 1 further comprising a content selling unit operable to sell content data on the basis of a manipulation signal transmitted from said second communication terminal; and
a data registration unit operable to register the content data, which is sold by said content selling unit, as new content in said data table data in association with said call reception end identifier.

5. The call processing system as claimed in claim 1 further comprising an upload unit operable to acquire content from said second communication terminal on the basis of a manipulation signal transmitted from said second communication terminal; and
a data registration unit operable to register the content data, which is acquired by said upload unit, as new content in said data table in association with said call reception end identifier.

6. The call processing system as claimed in claim 1 wherein said data registration unit is provided further with
the functionality of registering said content data in said data table in association with the call transmitter end identifier for identifying said first communication terminal as the call transmitter on the basis of the manipulation signal from said second communication terminal.

7. The call processing system as claimed in claim 1 further comprising:
an IP address reference unit operable to acquire an IP address from a telephone number, as acquired, by referring to a telephone number table in which the telephone number is associated with the IP address; and
a VOIP relay unit operable to convert a sound signal into an IP packet and relay the sound signal between said first communication terminal and said second communication terminal as the IP packet,
wherein the telephone number and the IP address assigned to said second communication terminal are used as said call reception end identifier,
wherein the telephone number and the IP address assigned to said first communication terminal at the call transmitter end are used as a call transmitter end identifier for identifying said first communication terminal,
wherein said terminal identifier acquiring unit acquires said call reception end identifier and said call transmitter end identifier as IP addresses,
wherein said content transmitter unit transmits said content data to said IP address at the call transmitter end as an IP packet.

8. A communication server operable to perform a call process from a first communication terminal to a second communication terminal, said communication server comprising:
a content data accumulating unit operable to accumulate content data;
a data table in which content data is associated with a call reception end identifier for identifying said second communication terminal;
a terminal identifier acquiring unit operable to acquire the call reception end identifier of said second communication terminal on the basis of a call signal transmitted from said first communication terminal to said second communication terminal;
a content transmitter unit operable to acquire, from said content data accumulating unit, the content data associated with said call reception end identifier by referring to said data table on the basis of the call reception end identifier as acquired by said terminal identifier acquiring unit, and transmit the content data to said first communication terminal;

9. The communication server as claimed in claim 8 wherein said content data is associated in said data table further with a call transmitter end identifier for identifying said first communication terminal which is the terminal at the call transmitter end,
wherein said terminal identifier acquiring unit acquires the call transmitter end identifier of the first communication terminal as the call transmitter on the basis of said call signal,
wherein said content transmitter unit operable to refer to said data table on the basis of the call reception end identifier and the call transmitter end identifier acquired by said terminal identifier acquiring unit, acquire the content data associated with said terminal identifiers from said content data accumulating unit, and transmit the content data to said first communication terminal.

10. The communication server as claimed in claim 8 further comprising:
an IP address reference unit operable to acquire an IP address from a telephone number, as acquired, by referring to a telephone number table in which the telephone number is associated with the IP address; and
a VOIP relay unit operable to convert a sound signal into an IP packet and relay the sound signal between said first communication terminal and said second communication terminal as the IP packet,
wherein the telephone number and the IP address assigned to said second communication terminal are used as said call reception end identifier,
wherein the telephone number and the IP address assigned to said first communication terminal at the call transmitter end are used as a call transmitter end identifier for identifying said first communication terminal,
wherein said terminal identifier acquiring unit acquires said call reception end identifier and said call transmitter end identifier as IP addresses,
wherein said content transmitter unit transmits said content data to said IP address at the call transmitter end as an IP packet.

11. A communication terminal comprising:
a moving picture acquisition unit operable to transmit a call reception end identifier for identifying another communication terminal at the call reception end during a call process, and acquire content data associated with this call reception end identifier through the communication network; and
a call transmitter end output unit operable to output and display said content data, which is acquired, during said call process.

12. A call processing method operable to perform a call process from a first communication terminal to a second communication terminal, comprising:
a step (1) of acquiring the call reception end identifier of said second communication terminal on the basis of a call signal transmitted from said first communication terminal to said second communication terminal;
a step (2) of referring to a data table, in which content data is associated with a call reception end identifier for identifying said second communication terminal, on the basis of the call reception end identifier acquired in said step (1), and transmitting the content data associated with said call reception end identifier to said first communication terminal; and
a step (3) of outputting and displaying said content data, which is transmitted, at said first communication terminal during said call process.

13. The call processing method as claimed in claim 12 wherein said content data is associated in said data table further with a call transmitter end identifier for identifying said first communication terminal which is the terminal at the call transmitter end,
wherein the call transmitter end identifier of the first communication terminal as the call transmitter is acquired in said step (1) on the basis of said call signal,
wherein in said step (2) said data table is referred to on the basis of the call reception end identifier and the call transmitter end identifier acquired in said step (1), wherein the content data associated with said terminal identifiers is acquired from said content data accumulating unit, and wherein the content data is transmitted to said first communication terminal.

14. The call processing method as claimed in claim 12 further comprising a step (4) of measuring the frequency of transmitting said content data from said content transmitter unit and charging the user of said second communication terminal in accordance with the transmitting frequency.

15. The call processing method as claimed in claim 12 wherein, in advance of said step (1),
content data is sold on the basis of a manipulation signal transmitted from said second communication terminal, and this content data as sold is registered as new content in said data table in association with said call reception end identifier.

16. The call processing method as claimed in claim 12 wherein, in advance of said step (1),
content is acquired from said second communication terminal on the basis of a manipulation signal transmitted from said second communication terminal, and the content data, which is acquired, is registered as new content in said data table in association with said call reception end identifier.

17. The call processing method as claimed in claim 12 wherein said content data is registered in said data table in association with the call transmitter end identifier for identifying said first communication terminal as the call transmitter on the basis of the manipulation signal from said second communication terminal.

18. The call processing method as claimed in claim 12 wherein the telephone number and the IP address assigned to said second communication terminal are used as said call reception end identifier,
wherein the telephone number and the IP address assigned to said first communication terminal are used as a call transmitter end identifier for identifying said first communication terminal at the call transmitter end,
wherein, in advance of said step (1),
an IP address is acquired from a telephone number, as acquired, by referring to a telephone number table in which the telephone number is associated with the IP address, and a sound signal is converted into an IP packet and relayed between said first communication terminal and said second communication terminal as the IP packet,
wherein in said step (1) said call reception end identifier and said call transmitter end identifier are acquired as IP addresses, and
wherein in said step (2) said content data is transmitted to said IP address at the call transmitter end as an IP packet.
